(19) Europäisches Patentamt
European Patent Office
Office européen des brevets

(11) EP 2 207 111 A1

(12) **EUROPEAN PATENT APPLICATION**

(43) Date of publication:
**14.07.2010 Bulletin 2010/28**

(51) Int Cl.:
***G06F 17/30*** *(2006.01)* ***G06T 11/60*** *(2006.01)*

(21) Application number: **09305017.7**

(22) Date of filing: **08.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Thomson Licensing SA**
**92443 Issy-les-Moulineaux Cedex (FR)**

(72) Inventors:
• **Gu, Xiadong**
**Beijing 100085 (CN)**

• **Guo, Shengmin**
**Beijing 100085 (CN)**
• **Chen, Zhibo**
**Beijing 100085 (CN)**

(74) Representative: **Rittner, Karsten**
**Deutsche Thomson OHG**
**European Patent Operations**
**Karl-Wiechert-Allee 74**
**30625 Hannover (DE)**

(54) **Method and apparatus for generating and displaying a video abstract**

(57) Browsing videos quickly is a common way to check their contents. It is desirable to create automatically an abstract of a video sequence in a page by page story book, so that the temporal order among images is preserved strictly and can easily be identified. A method for generating and displaying a video abstract comprises separating a video into a plurality of video shots, determining within each video shot a keyframe, extracting from the keyframes salient regions (ROI) and providing control signals for displaying the salient regions on a display page. Particularly, the ROIs may be resized, and their locations are determined according to the sequential order, wherein vertical boundaries in different lines are dis-aligned (D) in order to improve the intuitive recognition of the temporal structure.

Fig.5

**Description**

Field of the invention

This invention relates to a method for generating and displaying a video abstract, and to an apparatus for generating and displaying a video abstract.

Background

The quantity of multimedia data is increasing dramatically in recent years with the popularity of digital camcorders. People are more and more interested in recording some curious things around them with camcorders, and sharing video segments with others by uploading the video to some video sharing websites such as Youtube. Though these videos are well ranked and labelled manually, browsing their contents quickly is still the commonest mean to check whether they are what the viewers want. Unfortunately, it is not an easy task for most streaming videos. In this case, pictorial video summaries are immensely useful things, especially if well made, accurate and intrinsically interesting.

To accomplish this objective, there are two key techniques involved: video summarization and video visualization. Video summarization techniques generally extract a set of the most representative frames from video sequence based on the analysis of video structures and video highlights [ref.7][1], and then render these frames in a dynamic or static form [ref.3][2].

[1]Y.T.Zhuang, Y.Rui, T.S.Huang and S.Mehrotra. Adaptive Key Frame Extraction Using Unsupervised Clustering. ICIP'98

[2]Y. F. Ma and H. J. Zhang. Video Snapshot: A Bird View of Video Sequence. Proceedings of the 11th International Multimedia Modeling Conference, 2005

In constraint with the dynamic form, a collection of still images (or static summarization) is more preferred in many applications due to its perfect displaying and delivering properties. In addition, pictorial video summary is not a simple collection of key-frames, but a compact summary of entire video with visually pleasing form. Therefore, visualization is the other important issue for pictorial summary. Over the years there are many attempts to address video visualization and have sprung up plenty of outstanding achievements.
In [ref.1], Taniguchi et al.[3] have summarized video using a 2-D packing of "panoramas" which are large images formed by compositing video pans. A "panorama" enables a single key-frame to represent all images include in a shot with camera motion. Because frame sizes were not adjusted for better packing, much white space can be seen in the summary results.

[3]Y. Taniguchi, A. Akutsu and Y. Tonomura. PanormaExcerpts: Extracting and Packing Panoramas for Video Browsing. ACM Multimedia'97, 427-436

The pictorial video summary presented in [ref.2][4] is a collection of video posters arranged in time order to convey the underlying story. After resized according to the "dominance" analysis to each segment, the images are placed under the constraints of some selected graphic layout patterns and rendered as a set of video posters. Although video poster sequence reserves time order of story, the time order within each poster is lost, and the lack of sequential organization can make the summaries difficult to interpret. In addition, the usage of layout patterns reduces to the diversity of layout and brings down user's visual experience.

[4]M. M. Yeung and B. Yeo. Video Visualization for Compact Presentation and Fast Browsing of Pictorial Content. IEEE Transactions on CSVT, 7(5), 1997, 771-785

Video Manga [ref.4][5] presents methods for automatically generating comic-like pictorial video summary, in which an importance measure is defined based on video clip's length and novelty.

[5]S. Uchihashi, J. Foote, A. Girgensohn and J. Boreczky. Video Mange: Generating Semantically Meaningful Video Summaries. ACM Multimedia'99, 383-392

The selected key-frames are resized according to their importance values and are approximately packed along time order. Most importantly, the comic-like presentation is refreshing and worthy of learning. However, for the visual pleasant purpose, the summary result does not effectively reserve time order due to the arrangement of images with different sizes, sometimes the frame size has to be adjusted according to the space left. Nevertheless, there are white spaces left inevitably. In addition, only three image sizes can be used and the layouts often look too uniform because of groups of images with the same size.
In [ref.3][2], Ma et al. presented a novel video summary, called Video Snapshot, which is a bird view of video enabling viewers to grasp main contents of video at a glance. Moreover, a comprehensive scoring scheme for content filtering called PRID (Pleasurable, Representative, Informative and Distinctive) and an optimized bubble-map based visualization algorithm are proposed, which considers the trade off between space saving and structure display. Through the bubble-map is an effective and flexible form for summary presentation, it is not a very intuitive and diversity interface. Meanwhile, the saliency of each key-frame is not conveyed because all frames are arranged without resized according to their importance. Commonly, too many key-frames are placed in limited canvas, which is not beneficial for users to browse.

Wang et al. [ref.5][6] present an automatic procedure for constructing a compact synthesized collage from a video sequence, called Video Collage. Be different from other works, the authors not only select most representative images from video, but also extract salient regions of interest (ROI) from those images and resize them according to their saliency. Viewed from representation form, the goal of [ref.5] is to automatically construct a compact, singe paged collage.

[6] T. Wang, T. Mei, X. S. Hua, X. L. Liu and H. Q. Zhou. Video Collage: A Novel Presentation of Video Sequence. IEEE ICME'07

Summary of the Invention

In view of the above, it is desirable to create fully automatically an abstract of a video sequence in a page by page story book, wherein the temporal order among images in the story book is preserved strictly and can easily be identified. The created page layout should not be restricted to limited templates, and the created story book follows a user pleased style such as e.g. Japanese manga, which is editable under the framework. Simultaneously, the information contained in the created story book should be maximized.

The present invention provides an advantageous method and apparatus for automatically generating a video abstract and preparing it for being displayed which fulfills the above-described conditions.

As a general idea, a method for generating and displaying a video abstract comprises separating a video into a plurality of video shots, determining within each video shot a keyframe, extracting from the keyframes salient regions and providing control signals for displaying the salient regions on a display page. Particularly, the salient regions may be resized, and their locations are determined according to the sequential order, wherein vertical boundaries in different lines are disaligned in order to improve the intuitive recognition of the temporal structure.

According to one aspect of the invention, a method for generating and displaying a video abstract comprises steps of detecting the boundaries of a plurality of video shots, determining a keyframe within each of the video shots, extracting from each of the keyframes a region of interest (ROI),

determining locations for a plurality of said ROIs according to their sequential order on a display page, resizing at least some of the ROIs in a line (the number of ROIs per line is not limited), wherein each resized ROI is replaced by a different but largely overlapping region of its respective keyframe, the different region having a different height and/or width, and wherein the ROIs (or stacks of ROIs if ROIs are stacked) in a line have the same height, and

providing control signals for displaying the plurality of ROIs on said display page according to the determined locations.

In one embodiment of the invention, a method for generating and displaying a video abstract comprises steps of detecting the boundaries of a plurality of video shots, determining a keyframe within each of the video shots, extracting from each of the keyframes a region of interest (ROI), wherein the ROI of each keyframe has its individual size,

determining locations for a plurality of said ROIs according to their sequential order on a display page, wherein ROIs of later keyframes are located on a same line on the right, or on a subsequent line below the ROIs of earlier keyframes, determining that the difference between the horizontal position of a first vertical boundary between sequentially adjacent ROIs within a first line and the horizontal position of a second vertical boundary between adjacent ROIs within a second line is below a predefined threshold, resizing the ROIs in the first line or in the second line, wherein said difference is increased above said threshold and wherein each resized ROI is replaced by a different but largely overlapping region of its respective keyframe, the different region having a different height and/or width, and wherein all ROIs in a line have the same height, and

providing control signals for displaying the plurality of ROIs on said display page according to the determined locations.

According to another aspect of the invention, an apparatus for generating and displaying a video abstract comprises detection means for detecting the boundaries of a plurality of video shots,

first determining means for determining a keyframe within each of the video shots,

extraction means for extracting from each of the keyframes a region of interest (ROI),

second determining means for determining locations for a plurality of said ROIs according to their sequential order on a display page,

resizing means for resizing at least some of the ROIs in a line, wherein each resized ROI is replaced by a different but largely overlapping region of its respective keyframe, the different region having a different height and/or width, and wherein the ROIs (or stacks of ROIs if ROIs are stacked) in a line have the same height, and

output means for providing control signals for displaying the plurality of ROIs on said display page according to the determined locations.

In one embodiment of the invention, an apparatus for generating and displaying a video abstract comprises detection means for detecting the boundaries of a plurality of video shots,

first determining means for determining a keyframe within each of the video shots,

extraction means for extracting from each of the keyframes a ROI, wherein the ROI of each keyframe has its individual size,

second determining means for determining locations for a plurality of said ROIs according to their sequential order on a display page, wherein ROIs of later keyframes are located on a same line on the right, or on a subsequent line below the ROIs of earlier keyframes,

third determining means for determining that the difference between the horizontal position of a first vertical boundary between sequentially adjacent ROIs within a first line and the horizontal position of a second vertical boundary between adjacent ROIs within a second line is below a predefined threshold,

resizing means for resizing the ROIs in the first line or in the second line, wherein said difference is increased above said threshold and wherein each resized ROI is replaced by a different but largely overlapping region of its respective keyframe, the different region having a different height and/or width, and wherein all ROIs in a line have the same height, and

output means for providing control signals for displaying the plurality of ROIs on said display page according to the determined locations.

Advantageous embodiments of the invention are disclosed in the dependent claims, the following description and the figures.

Brief description of the drawings

Exemplary embodiments of the invention are described with reference to the accompanying drawings, which show in

Fig.1 a combination operation,
Fig.2 a tree structure describing a layout,
Fig.3 a raw layout versus a resized layout,
Fig.4 a saliency region representation,
Fig.5 location of horizontal and vertical boundaries in a layout tree,
Fig.6 a conventional boundary alignment,
Fig.7 an exemplary first boundary alignment according to one aspect of the invention,
Fig.8 an exemplary second boundary alignment according to one aspect of the invention, and
Fig.9 an exemplary StoryBook result.

Detailed description of the invention

This invention proposes an approach to generate a concise, effective and attractive pictorial summary, which is called StoryBook herein. The employed layout style comes nearest to the style of Japanese manga. However, the layout algorithm is not under any constraint of templates. Besides, our approach also has the following properties:

1) It is a fully automatic scheme to abstract a video sequence into a page by page story book.
2) The temporal order among images in the story book is preserved strictly and easy to be identified.
3) The created page layout should not be restricted to fixed or limited templates.
4) The created book follows a user pleased style, e.g. Japanese manga, or any other attractive style user liked with a small modification under the framework.
5) Take as much information as possible into the story book with a limited number of pages.

The objective of the present invention is to fully automatically abstract a video sequences (digital video from web, home video, movie, etc.) into an attractive page by page story book which follows an editable user pleased style such as Japanese Manga, while:

(1) the temporal order among images in each page, among pages in the story book should be preserved strictly and easy to be identified,
(2) the created page layout should not be restricted to limited templates, and
(3) as much information as possible is extracted through these limited pages.

In order to reach this objective, two types of techniques are involved: video analysis (including key frame extraction, region of interest/ROI, etc.), and page layout.

1. Video Analysis

Video analysis methods are generally known. But we require the results of video analysis before generating StoryBook. So we first give a brief introduction and reference of these video analysis results.

## 1.1 Key-frame selection

According to [ref.7][1], shot boundary detection and key-frame extraction are two bases for abstraction and summarization techniques. A shot is defined as an unbroken sequence of frames recorded from a single camera, which forms the building block of a video. Key-frame is the frame which can represent the salient content of the shot. Depending on the content complexity of the shot, one or more key frames can be extracted from a single shot.
An algorithm for key frame extraction based on unsupervised clustering is proposed in [ref.7][1].
**7** X.D.Gu, G.P.Qiu, etc. An Information Theoretic Model of Spatiotemporal Visual Saliency, EP-PA060040

## 1.2 ROI Extraction

Salient visual features and motions that attract human attention can be important and powerful cues for visual information analysis and processing. In [ref.8][7], we propose a computing efficient visual saliency estimation scheme which provides a saliency map indicating the importance of each pixel of the frame.
Based on the saliency map, a region of interest (ROI) is generated which indicate the region which is estimated to be more attractive to viewers. In out implement, the ROI is defined as a rectangle.

## 2. Layout Scheme to Generate Story Book

### 2.1 Problem Formulation

Given a video sequence V containing M frames (images) $\{I_i\}_{i=1}^{M}$. Story Book selects N (N<<M) representative images from V and arranges the ROI of these images $\{R_j\}_{j=1}^{N}$ on a series of pages $\{C_k\}_{k=1}^{T}$. Let λ be

one feasible solution $\lambda = \{R_j\}_{j=1}^{N}$. In StoryBook, each ROI $R_j$ has a set of state variables $R_j = \{v_j, p_j, s_j\}$, where $v_j$ indicates the page placing the ROI and $1 \leq v_j \leq T$, $p_j$ is the spatial position of $R_j$ in the page, $s_j$ is the size (width and height) of $R_j$ after resized according to the need of page layout. By the triple of we can determine which page $R_j$ should be in and how $R_j$ is presented in the page (i.e. position and size). To incorporate several desired properties, such as maximize the measurement of layout and information, we formulate the creation of StoryBook as finding the best λ to maximize the objective function E(λ):

$$E(\lambda) = \omega_1 E_{layout}(\lambda) + \omega_2 E_{Info}(\lambda)$$

(1)

where $E_{layout}(\lambda)$ denotes the visual layout measure of the Story Book, while $E_{Info}(\lambda)$ is the information rendered after resizing ROIs according to the need of page layout, $\omega_1$ and $\omega_2$ are two predefined weights controlling the relative strength of each measurement items. Because ROIs follow the temporal order strictly, the optimization of E(λ) could be divided into several sub tasks by adapting the pagination mechanism. Firstly, the ROIs are determined to arrange in a certain page. And then, the optimization of E(λ) could be converted into sub optimization problem in each page $\{E(\lambda_k)\}_{k=1}^{T}$,

which could be optimized independently and in sequence.
Though the optimization problem is divided into sub tasks, for each page, the search scope of optimization is very huge. Hence, we provide a heuristic mechanism: firstly, all possible layouts are generated and the best one or top best N layouts are chosen as the candidate layout(s); secondly, on the basis of given layout(s), ROIs involved in the layout are resized to adjust the sharp of the page, meanwhile finding the best resizing scheme to render the most information in one page. "sharp" means the page layout is neat, especially aligned (not ragged) in page boundary. 2.2 Finding The Best Layout

Because the temporal order of each ROI appearing in the page is fixed, e.g. ROI are arranged with the manner of "left to right" and "top to down" according to the temporal order in the video sequence. To follow the temporal order, each ROI may be combined with its former ROI, or combined with its later ROI, while the combining operation could be horizontal or vertical.

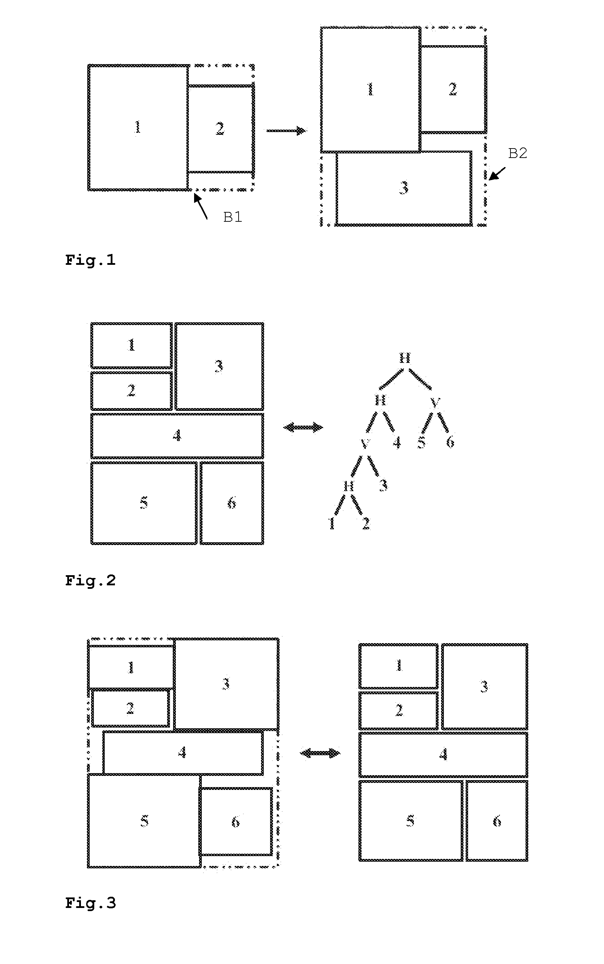

To describe uniformly, we define each ROI as a bounding box, while two ROIs are combined to a bigger bounding box. The bounding box has width and height properties, and the combined bounding box's size is associated with not only its child bounding boxes, but also with the combining operations. This is shown in Fig.1, where two ROIs 1,2 are combined into a first bounding box B1, and together with a third ROI 3 are combined into a second bounding box B2.

As mentioned above, there are two kinds of combining operations. For horizontal combination, assume that the width of the acroscopic box is $ab_w$, its height is $ab_n$, and the width of the basiscopic box is $bb_w$, its height is $bb_h$, then the combined box's width is $cb_w = \max(ab_w, bb_w)$, while the height is $cb_h = ab_h + bb_h$. The vertical combination is in the same way, by the same token. Acroscopic means facing or on the side towards the apex. Basiscopic means facing or on the side towards the base.

Firstly, we check how many ROIs can be arranged in a current page according to the area ratio matter. And then, by heuristic searching step by step, we could generate all possible layout styles, which preserve the temporal order among ROIs. Finally, the layout quality is measured as follows.

To measure the layout quality, there are three factors taken into account: 1) number of ROIs in one page; 2) layout diversity; 3) the cost measure for creating layout on the basis of given ROI.

$$E_{layout}(\lambda_k) = \alpha A(\lambda_k) + \beta B(\lambda_k) + \gamma C(\lambda_k) \qquad (2)$$

where $A(\lambda_k), B(\lambda_k), C(\lambda_k)$ measure the number of ROIs, layout diversity and layout cost respectively.

A) ROI Number Measurement

Generally there are 3-8 images per page in comic books, 5-6 at most. We formulate the measurement as follows:

$$A(\lambda_k) = \frac{1}{\sqrt{2\pi}\sigma} \exp(-\frac{(\varphi - \mu)^2}{\sigma^2}), s.t. \frac{\sum_{j=\psi}^{\psi+\varphi} e_j}{e_{page}} \in [LT, MT] \qquad (3)$$

where $\varphi$ is the number of ROIs which are arranged in $C_k$, $\psi$ denotes the first ROI's sequence, $e_j$ and $e_{page}$ are the area of $R_j$ and the page respectively. LT and MT are constants, exemplary values are $\mu=5.5$, $\sigma=1.0$, LT=0.7, MT=1.2. The ratio between the sum of the original size of the ROIs contained in a page and the page size should be larger than LT and smaller than MT. If this ratio is bigger than 1.0, downscaling of some or all of the ROIs is required.

B) Layout Diversity Measurement

Inspired by literature [ref.6][8], we represent layouts using a "tree structure" as illustrated in Fig.2. The terminal nodes correspond to images and the interior nodes correspond to horizontal ("H") and vertical ("V") combination.

[8] C. B. Atkins. Adaptive Photo Collection Page Layout. International Conference on Information Proceeding. ICIP'04

Layout diversity is an important factor to measure the layout quality. Assume that the number of horizontal and vertical combination in layout is $h(\lambda_k)$ and $v(\lambda_k)$, then the diversity measurement is formulated as follows:

$$B_1(\lambda_k) = -p(h, \lambda_k)\log(p(h, \lambda_k)) + p(v, \lambda_k)\log(p(v, \lambda_k)) \qquad (4)$$

where

$$p(h,\lambda_k) = \frac{h(\lambda_k)}{h(\lambda_k)+v(\lambda_k)} \quad \text{and} \quad p(v,\lambda_k) = \frac{v(\lambda_k)}{h(\lambda_k)+v(\lambda_k)}.$$

We found that if there is a full column image (as ROI 4 in Fig.2) in page layout, the layout quality is promoted to some extent. The promotion is measured by $B_2(\lambda_k)$, and we set $B_2(\lambda_k)$ as a positive constant when full column ROIs exist. It is easy to check whether there is a full column ROI in layout, because it is represented by a path from a root node to a terminate node in the tree structure whose interior nodes are all "H".

C) Layout Cost Measure

As shown in Fig.3, for any page layout the ROIs should be resized to adopt the sharp of the page. Before resizing, the layout is rendered as a raw style, which is only a combination of ROIs. White spaces may exist due to the difference between the sizes of two ROIs combined. Hence, we can measure the cost of resizing ROIs by comparing the similarity between the sharps of raw layout and the page. Additionally the white spaces are also taken into account.
In Fig.3, the bounding box enclosed the raw layout is particularly important because it conveys the sharp and relative area of the entire layout, which is referred as principal bounding box in [ref.6][8]. Then we formulate the resizing cost as:

$$C(\lambda_k) = \frac{\sum_{j=\psi}^{\psi+\varphi} e_j}{e_{pbb}} \frac{\min\{a_{pbb}, a_{page}\}}{\max\{a_{pbb}, a_{page}\}} \qquad (5a)$$

where $a_{pbb}$ and $a_{page}$ are the aspect ratio of the principle bounding box and the page respectively, while other symbols are introduced hereinbefore.
For the last page, maybe there are not enough ROIs to fill the entire page, so the measurement is a little changed:

$$C(\lambda_k) = \frac{\sum_{j=\psi}^{\psi+\varphi} e_j}{e_{pbb}} \frac{\min\{w_{pbb}, w_{page}\}}{\max\{w_{pbb}, w_{page}\}} \qquad (5b)$$

where $w_{pbb}$ and $w_{page}$ are widths of the principle bounding box and the page.

2.3 Information Rendered Maximization

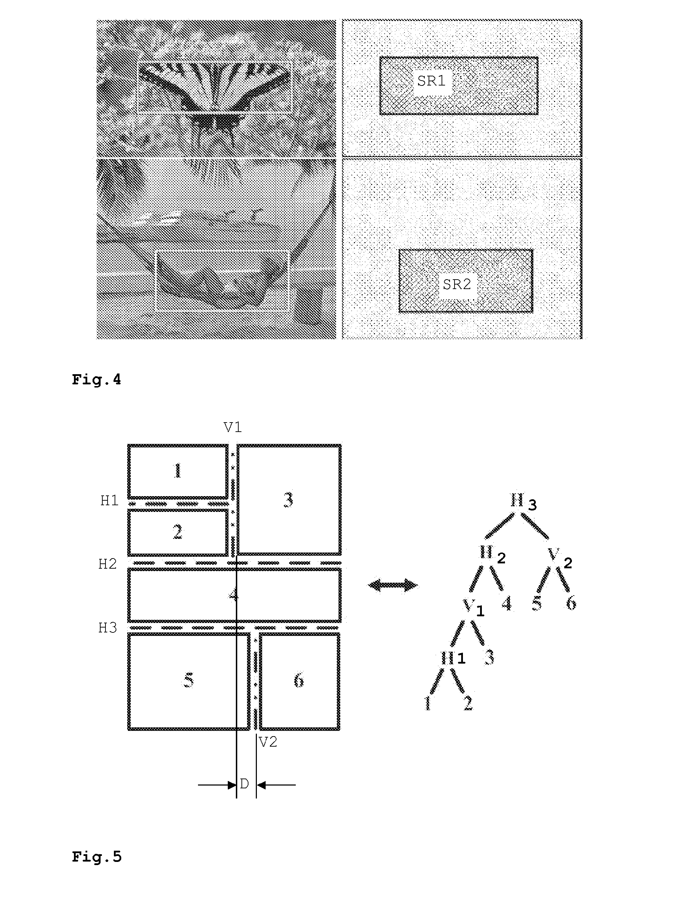

In digital tapestry, a high contrast image block is assumed to be salient. In our approach, the salient region of the image is approximated as a rectangle. An example is shown in Fig.4. The rectangle in the right column is used to approximate the salient region in the left column, which could be used to measure the information of the image.
As shown in Fig.3, most ROIs' sizes should be changed to adapting the sharp of the page. The general procedure of resizing is as follows: firstly, finding the least rectangle enclosing the salient region, which has the required aspect ratio; secondly, zooming in or out this rectangle and filling the relative area in the page. Unfortunately, sometimes the least rectangle goes beyond the bounds of the frame, then we have to cut off part of the salient region to adapt the aspect ratio requirement, which causes information loss. In addition, modest information loss caused by zooming out is also acceptable. Information Maximization can be viewed as an optimization problem and be solved by adopting Simulated Annealing (SA) algorithm in our approach. "Simulated Annealing" is a kind of popular "Machine Intelligence" method. We apply it to an optimization problem. By adjusting the boundaries among ROIs, we could change ROIs' width and height accordingly, so as to earn the most information rendered. The objective function of optimization is defined as:

$$E_{Info}(\lambda_k) = \sum_{j=\psi}^{\psi+\varphi} Info(RR_j, RL_j, RA_j)$$

$$(6)$$

where

$$Info(RR_j, RL_j, RA_j) = (1 - f_1(1 - \frac{Area(RR_j, RL_j)}{Area(RR_j)})(1 - f_2(1 - \frac{Width(RL_j)}{Width(RA_j)})))$$

in which $RR_j$ is salient rectangle of $R_j$, $RL_j$ is the least rectangle enclosing $RR_j$ in the frame, and $RA_j$ is the required rectangle in the page layout. It is worth to note that $RL_j$ and $RA_j$ have the same aspect ratio. I.e. when the width or height of a ROI is modified, this means that it is a different region of the original keyframe, but the image is not distorted. E.g. if we want to enlarge ROI from w*h to W*h (w<W), we will not change the aspect ratio, but include other parts of the image. Cutting off and zoom out operation on ROI may cause information loss. Hence, $f_1$ and $f_2$ are information loss measures for cutting off and zooming out. Particularly, $f_1$ and $f_2$ are not linear functions, so as to improve cutting off and zooming out operations.

Now we describe how to resize ROIs by adjusting the boundaries among them.

As shown in Fig.5, there is a one-to-one relationship between boundaries and interior nodes in layout tree. The region allocated to each ROI in the page can be adjusted by changing the horizontal boundaries H1,H2,H3 and vertical boundaries V1,V2 independently or simultaneously. The algorithm is listed in Tab.1, taking horizontal boundaries as an example.

---

**Algorithm 1 Resizing ROIs by adjusting boundary**

1: INPUT: Layout Binary Tree, Horizontal Boundary Value $hbv$ and Horizontal Interval $hi$.
2: Visit $hbv$'s corresponding interior node $hnd$ in LBT as follows.
3: **for all** child nodes $lcnd$ in $hnd$'s left subtree **do**
4:    **if** $lcnd$ is a terminal node **then**
5:       Set $lcnd$'s bottom as $hbv - \frac{1}{2}hi$
6:    **else if** $lcnd$ is a interior node of horizontal combination **then**
7:       Visit $lcnd$'s right subtree recursively.
8:    **else**
9:       Visit $lcnd$'s left and right subtree recursively.
10:   **end if**
11: **end for**
12: **for all** child node $rcnd$ in $hnd$'s right subtree **do**
13:   **if** $rcnd$ is a terminal node **then**
14:      Set $rcnd$'s top as $hbv + \frac{1}{2}hi$
15:   **else if** $rcnd$ is a interior node of horizontal combination **then**
16:      Visit $rcnd$'s left subtree recursively.
17:   **else**
18:      Visit $rcnd$'s left and right subtree recursively.
19:   **end if**
20: **end for**

Abbreviations:
hnd – horizontal node
LBT – Layout Binary Tree
lcnd – left child node
rcnd – right child node

---

Table 1: ROI Resizing Algorithm by Adjusting Boundary

2.4 Temporal order preservation

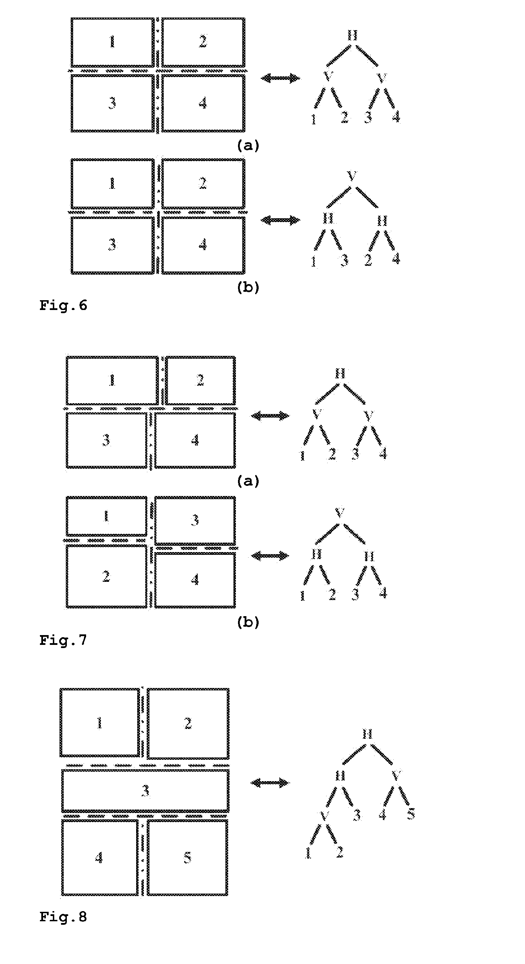

One solution provided here is how to preserve the temporal order among ROIs in page layout. This aspect has been neglected in previous comic-like layout research. Taking Fig.6 as an example, there are two different possible temporal orders when browsing the same layout, because the priority of horizontal and vertical boundaries is difficult to identify. In Fig.7, the boundaries with lower priority don't align to each other; therefore it is easier to derive the temporal order among ROIs. Hence, one aspect of the invention is to modify the alignment among boundaries, particularly vertical boundaries, when adjusting the page layout. According to this aspect, the vertical boundaries between a first pair of images (actually ROIs of keyframes) and a second pair of images are shifted so that they are not aligned. This is particularly useful if the first and second pair of images are - in the tree representation - first generation children of a single node.

E.g. in Fig.6a) both V nodes are first generation children of the H node, while in Fig.5 V1 is a second generation child of H3 and V2 is a first generation child of H3. In the visualization of the display this means that both vertical boundaries are in two lines that are not directly adjacent (in Fig.5 there is a ROI 4 and hence more than one horizontal boundary between V1 and V2).

There are also other conditions, when the boundaries with lower priority are separated by some ROIs. Then their alignment is not essential to preserve the temporal order. An example is shown in Fig.8. However, it is still advantageous for easier visual recognition if the vertical boundaries are disaligned.

By analyzing the layout tree structure, we argue that the alignment issue exists among interior nodes in different subtrees, which have the same combination properties. In regard to those interior nodes in the same subtrees, their boundaries should keep the proposed size relationships, which is easy to obtain. Concerning about the same manner between horizontal and vertical interior nodes, this algorithm is presented by taking horizontal interior nodes as example. In line 5 of Tab.2, the command "rnd's boundary can't align to hnd's boundary" is the instruction, which says that rnd's boundary and hnd's boundary must be shifted so that they are not aligned.

---

**Algorithm 2** Alignment Rules Generating Algorithm

```
1:  INPUT: Layout Binary Tree, Interior Node hnd with Horizontal Combination Property.
2:  if hnd is in its parent pst's left subtree then
3:      for all interior node rnd visited in pst's right subtree do
4:          if rnd is with horizontal property then
5:              rnd's boundary can't align to hnd's boundary
6:          else
7:              Visit rnd's right subtree recursively.
8:          end if
9:      end for
10: else
11:     for all interior node lnd visited in pst's left subtree do
12:         if lnd is with horizontal property then
13:             lnd's boundary can't align to hnd's boundary
14:         else
15:             Visit lnd's left subtree recursively.
16:         end if
17:     end for
18: end if
```

Abbreviations:
pst – current parent subtree

Table 2: Alignment Rules Generating Algorithm

By applying Algorithm 2 firstly, we could derive all alignment rules among interior nodes with same structure / combination properties. The boundaries adjusting procedure in Algorithm 1 should be under the constraint of alignment rules strictly, so as to guide the viewer to browse the images in temporal order unambiguously. By applying the SA algorithm, we could earn most information rendered on the basis of given layout style.

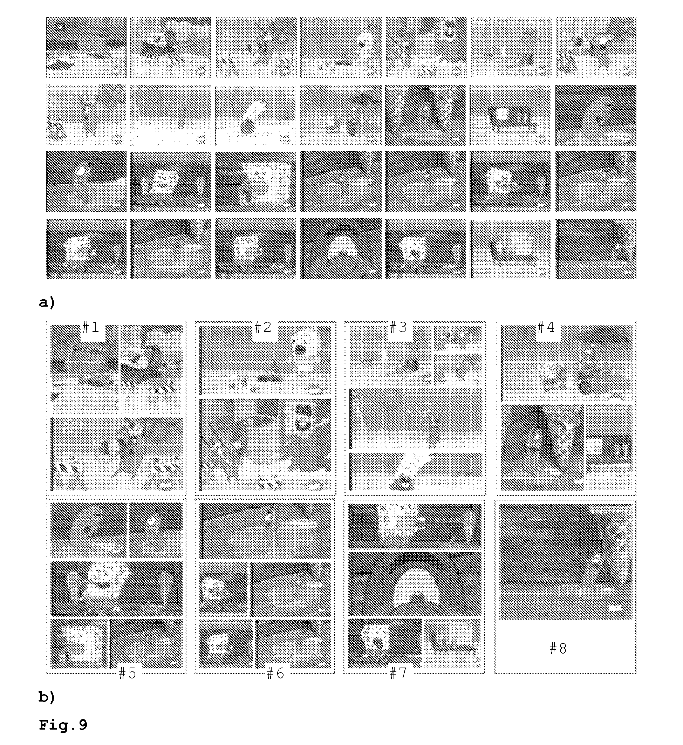

Fig.9 shows a layout example obtained by applying our approach. Fig.9 a) shows key-frames selected from a video sequence, and Fig.9 b) shows layout results. As can be seen, all the pages have different layouts. In frames #5 and #6 of Fig.9 b), which have two vertical boundaries each, the temporal order within the frames is easier to recognize because the vertical boundaries are disaligned (i.e. they are parallel, but there is a noticeable and

perceivable distance between them, e.g. 20 pixels; they are not on the same line).

The invention can be used for automatic video abstraction. In such application, a video is split into a plurality of video shots using boundary detection. Then for each video shot a keyframe is determined and from each of the keyframes a salient region (also called region of interest or ROI) is extracted. Since the region depends on the image content, the ROI of each keyframe usually has an individual size. In a next step, locations for a plurality of the ROIs are determined on a display page, according to their sequential order. Commonly the ROIs of later keyframes are located on a same line on the right, or on a subsequent line below the ROIs of earlier keyframes (reading left-to-right and up-down; in case of other reading habits, this may be different). Then (refer to Fig.5) the difference between the horizontal position of a first vertical boundary V1 between sequentially adjacent ROIs 1,2 within a first line and the horizontal position of a second vertical boundary V2 between adjacent ROIs 3,4 within a second line is determined (lines are horizontal structures). If the difference D is below a predefined threshold, it should be enlarged. In the next step, the ROIs in the first line or in the second line are resized, wherein said difference D is increased above said threshold and wherein each resized ROI is replaced by a different region of its respective keyframe, wherein the different region has a different height and/or width and all ROIs in a line have the same height. The original ROI and the replacement region are not identical, but largely overlapping. As a result, control signals are provided for displaying the plurality of ROIs on a display page according to the determined locations. The control signals can be used to control a video display.

It will be understood that the present invention has been described purely by way of example, and modifications of detail can be made without departing from the scope of the invention.

Each feature disclosed in the description and (where appropriate) the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections. Reference numerals appearing in the claims are by way of illustration only and shall have no limiting effect on the scope of the claims.

**Claims**

1. A method for generating and displaying a video abstract, comprising steps of

   - detecting the boundaries of a plurality of video shots;
   - determining a keyframe within each of the video shots;
   - extracting from each of the keyframes a region of interest or ROI, wherein the ROI of each keyframe has its individual size;
   - determining locations for a plurality of said ROIs according to their sequential order on a display page, wherein ROIs of later keyframes are located on a same line on the right, or on a subsequent line below the ROIs of earlier keyframes;
   - determining that the difference (D) between the horizontal position of a first vertical boundary (V1) between sequentially adjacent ROIs (1,2) within a first line and the horizontal position of a second vertical boundary (V2) between adjacent ROIs (3,4) within a second line is below a predefined threshold;
   - resizing the ROIs in the first line or in the second line, wherein said difference is increased above said threshold and wherein each resized ROI is replaced by a different but largely overlapping region of its respective keyframe, the different region having a different height and/or width, and wherein all ROIs in a line have the same height; and
   - providing control signals for displaying the plurality of ROIs on said display page according to the determined locations.

2. Method according to claim 1, wherein two or more ROIs can be vertically stacked within a line, and wherein all ROIs or vertical stacks of ROIs a line have the same height.

3. Method according to any of claims 1-2, wherein each ROI has a rectangle shape.

4. Method according to any of claims 1-3, wherein the step of resizing further comprises the steps of

   - determining a required aspect ratio for a ROI;
   - determining in the respective keyframe the least rectangle enclosing the salient region and having the required aspect ratio; and
   - replacing the ROI by the determined rectangle.

5. Method according to any of claims 1-4, wherein substantially the complete display area is covered by images.

6. Apparatus for generating and displaying a video abstract, comprising

   - means for detecting the boundaries of a plurality of video shots;
   - means for determining a keyframe within each of the video shots;
   - means for extracting from each of the keyframes a region of interest or ROI, wherein the ROI of each keyframe has its individual size;
   - means for determining locations for a plurality of said ROIs according to their sequential order on a display page, wherein ROIs of later keyframes are located on a same line on the right, or on a subsequent line below the ROIs of earlier keyframes;
   - means for determining that the difference (D) between the horizontal position of a first vertical boundary (V1) between sequentially adjacent ROIs (1,2) within a first line and the horizontal position of a second vertical boundary (V2) between adjacent ROIs (3,4) within a second line is below a predefined threshold;
   - means for resizing the ROIs in the first line or in the second line, wherein said difference is increased above said threshold and wherein each resized ROI is replaced by a different but largely overlapping region of its respective keyframe, the different region having a different height and/or width, and wherein all ROIs in a line have the same height; and
   - means for providing control signals for displaying the plurality of ROIs on said display page according to the determined locations.

7. Apparatus according to claim 6, wherein two or more ROIs can be vertically stacked within a line, and wherein all ROIs or vertical stacks of ROIs a line have the same height.

8. Apparatus according to claim 6 or 7, wherein the means for resizing comprises

   - means for determining a required aspect ratio for a ROI;
   - means for determining in the respective keyframe the least rectangle enclosing the salient region and having the required aspect ratio; and
   - means for replacing the ROI by the determined rectangle.

9. Apparatus according to one of the claims 6-8, wherein substantially the complete display area is covered by images.

Fig.1

Fig.2

Fig.3

**Fig.4**

**Fig.5**

Fig.6

Fig.7

Fig.8

a)

b)

Fig.9

Europäisches
Patentamt

European
Patent Office

Office européen
des brevets

# EUROPEAN SEARCH REPORT

Application Number

EP 09 30 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAO MEI ET AL: "Video collage: presenting a video sequence using a single image" THE VISUAL COMPUTER; INTERNATIONAL JOURNAL OF COMPUTER GRAPHICS, SPRINGER, vol. 25, no. 1, 19 August 2008 (2008-08-19), pages 39-51, XP019656379 ISSN: 1432-2315 * abstract; figures 1,2,6,11 * * page 39, right-hand column - page 40, left-hand column * * page 42, paragraph 3 * * page 43, paragraphs 3.2,3.3 * * pages 44-45, paragraphs 4,4.1 * * page 50, paragraph 5.3 * ----- | 1-9 | INV. G06F17/30 G06T11/60 |
| X,D | TANG WANG ET AL: "Video Collage: A Novel Presentation of Video Sequence" MULTIMEDIA AND EXPO, 2007 IEEE INTERNATIONAL CONFERENCE ON, IEEE, PI, 1 July 2007 (2007-07-01), pages 1479-1482, XP031123916 ISBN: 978-1-4244-1016-3 * the whole document * ----- | 1-9 | TECHNICAL FIELDS SEARCHED (IPC) G06F G06T |

The present search report has been drawn up for all claims

| Place of search | Date of completion of the search | Examiner |
|---|---|---|
| Munich | 17 March 2009 | Laurentowski, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP PA060040 A

### Non-patent literature cited in the description

- **Y.T.Zhuang ; Y.Rui ; T.S.Huang ; S.Mehrotra.** Adaptive Key Frame Extraction Using Unsupervised Clustering. *ICIP'98*
- **Y. F. Ma ; H. J. Zhang.** Video Snapshot: A Bird View of Video Sequence. *Proceedings of the 11th International Multimedia Modeling Conference,* 2005
- **Y. Taniguchi ; A. Akutsu ; Y. Tonomura.** PanormaExcerpts: Extracting and Packing Panoramas for Video Browsing. *ACM Multimedia'97,* 427-436
- **M. M. Yeung ; B. Yeo.** Video Visualization for Compact Presentation and Fast Browsing of Pictorial Content. *IEEE Transactions on CSVT,* 1997, vol. 7 (5), 771-785
- **S. Uchihashi ; J. Foote ; A. Girgensohn ; J. Boreczky.** Video Mange: Generating Semantically Meaningful Video Summaries. *ACM Multimedia'99,* 383-392
- **T. Wang ; T. Mei ; X. S. Hua ; X. L. Liu ; H. Q. Zhou.** Video Collage: A Novel Presentation of Video Sequence. *IEEE ICME'07*